(19) Europäisches Patentamt / European Patent Office / Office européen des brevets

(11) **EP 2 214 009 A2**

(12) **DEMANDE DE BREVET EUROPEEN**

(43) Date de publication:
04.08.2010 Bulletin 2010/31

(51) Int Cl.:
*G01N 29/44* (2006.01)  *G01N 29/50* (2006.01)
*G01N 29/06* (2006.01)  *G01S 7/52* (2006.01)
*G01S 15/00* (2006.01)

(21) Numéro de dépôt: 10151600.3

(22) Date de dépôt: 25.01.2010

(84) Etats contractants désignés:
AT BE BG CH CY CZ DE DK EE ES FI FR GB GR HR HU IE IS IT LI LT LU LV MC MK MT NL NO PL PT RO SE SI SK SM TR
Etats d'extension désignés:
AL BA RS

(30) Priorité: 30.01.2009 FR 0950612

(71) Demandeur: Centre National de la Recherche Scientifique
- CNRS -
75794 Paris Cédex 16 (FR)

(72) Inventeurs:
• **Larose, Eric François**
38240 Meylan (FR)
• **Rossetto-Giaccherino, Vincent Bruno Robert**
38100 Grenoble (FR)

(74) Mandataire: **Cabinet Plasseraud**
52, rue de la Victoire
75440 Paris Cedex 09 (FR)

(54) **Procédé de localisation d'apparition d'un défaut dans un milieu par une onde**

(57) Un milieu (1) est équipé de sources (5) adaptées pour émettre une onde, et de capteurs (6) adaptés pour recevoir l'onde émise. Le procédé comprend une étape d'initialisation dans laquelle on détermine des réponses impulsionnelles de référence de l'onde entre les sources et les capteurs, puis au moins une étape de détection de défauts, dans laquelle on mesure les réponses impulsionnelles de l'onde entre les sources et les capteurs, on calcule un coefficient de décorrélation entre les réponses impulsionnelles et les réponses impulsionnelles de référence, on calcule une probabilité d'exploration d'une position, on calcule une fonction d'erreur pour chaque couple de source-capteur, et on calcule le produit de au moins certaines des fonctions d'erreur des couples sources-capteurs. Le produit représente une cartographie de la probabilité d'apparition d'un défaut à chaque position du milieu.

FIG. 1

EP 2 214 009 A2

**Description**

L'invention concerne un procédé de localisation d'apparition d'un défaut dans un milieu par une onde.

On connait des procédés de localisation de défauts dans lesquels ledit milieu est équipé :

- de sources placées dans ledit milieu et adaptées pour émettre une onde dans le milieu, et
- de capteurs placés dans ledit milieu et adaptés pour recevoir ladite onde émise.

Notamment, des procédés d'imagerie conventionnels font propager à différentes dates des ondes acoustiques ou ultrasonores dans un milieu. En supposant que la vitesse de propagation de l'onde est connue dans le milieu, il est possible de relier un temps à une distance et de construire une image de réflectivité ou de variation de réflectivité en chaque point du milieu, représentative des changements intervenus entre les deux dates.

Ce type de procédé est efficace pour repérer des hétérogénéités ou diffuseurs dans un milieu, lorsque l'onde se propage dans le milieu en régime de diffusion simple, c'est-à-dire lorsque lors de son trajet, l'onde n'interagit qu'avec une seule hétérogénéité avant d'être détectée.

Dans le cas d'un milieu comprenant de nombreuses hétérogénéités, tel que du béton, l'onde ultrasonore utilisée dans le procédé connu susmentionné est de relativement basse fréquence : inférieure à 50 kHz. Cependant, lorsqu'on cherche à détecter des défauts de faible dimension inclus dans un tel milieu hétérogène, ce procédé est inefficace car la longueur d'onde utilisée est trop grande. De plus, le procédé en régime de diffusion simple est peu sensible car l'onde ultrasonore ne rencontre le défaut qu'une seule fois lors de son parcours dans le milieu.

D'autre part, lorsque l'onde se propage dans le milieu en régime de diffusion multiple dans un tel milieu hétérogène, c'est-à-dire lorsque lors de son trajet, l'onde interagit avec plusieurs hétérogénéités avant d'être détectée, une telle technique d'imagerie conventionnelle n'est plus opérationnelle. Il n'est plus possible d'associer un temps de propagation à un trajet unique, ni d'associer un trajet à une hétérogénéité.

La présente invention a notamment pour but de pallier ces inconvénients, et de permettre notamment la localisation d'un défaut en régime de diffusion multiple.

A cet effet, un procédé de localisation d'apparition de défaut comprend les étapes suivante :

- une étape d'initialisation dans laquelle on détermine des réponses impulsionnelles de référence $h_{ref}(R,S,t)$ de l'onde entre les sources et les capteurs, puis
- au moins une étape de détection de défauts, dans laquelle :

  a) on mesure à une date $t_i$ les réponses impulsionnelles $h_i(R,S,t)$ de l'onde entre les sources et les capteurs, i étant un indice naturel positif,
  b) on calcule un coefficient de décorrélation $\kappa_i(S,R,t)$ entre les réponses impulsionnelles $h_i(R,S,t)$ à la date $t_i$ et les réponses impulsionnelles de référence $h_{ref}(R,S,t)$,
  c) on calcule une probabilité d'exploration $P(S,R,t,x)$ d'une position x du milieu par l'onde acoustique,
  d) on calcule une fonction d'erreur $e_i(S,R,x)$ pour chaque couple de source-capteur, et

  e) on calcule le produit $p(i,x)$ de au moins certaines des fonctions d'erreur $e_i(S,R,x)$ des couples de source-

  $$p(i, x) = \prod_{S,R} e_i(S, R, x),$$

  capteur, par                                                        ledit produit $p(i,x)$ représentant
  une cartographie de la probabilité d'apparition d'un défaut U à chaque position x.

Grâce à ces dispositions, le procédé permet notamment de localiser des défauts de petite taille dans un milieu hétérogène.

Dans divers modes de réalisation du procédé selon l'invention, on peut éventuellement avoir recours en outre à l'une et/ou à l'autre des dispositions suivantes :

- le milieu comprend des hétérogénéités et l'onde se propage dans le milieu selon un régime de diffusion multiple pour lequel l'onde interagit au cours de son trajet avec plus d'une hétérogénéité ;
- après l'étape e), on normalise le produit $p(i,x)$ en divisant chaque valeur par Norm = $\int p(i, x).dx$, intégrale sur l'ensemble des positions x du milieu ;
- les réponses impulsionnelles de référence $h_{ref}(R,S,t)$ sont déterminées par la moyenne de N réponses impulsionnelles $h_j(R,S,t)$ à des dates $t_j$, j étant un indice naturel tel que $0 <= j < i$, et N étant tel que $1<= N <=i$ ;
- entre l'étape a) et b), on corrige les réponses impulsionnelles $h_i(R,S,t)$ mesurées en les remplaçant par des réponses

impulsionnelles corrigées $h_i(R,S,t(1-\epsilon))$,

où $\epsilon$ est un coefficient de dilatation temporel qui maximise le coefficient de corrélation suivant :

$$CC(\epsilon) = \frac{\int h_i(R, S, t(1-\epsilon)) \cdot h_{ref}(R, S, t) \cdot dt}{\sqrt{\int h_i^2(R, S, t) \cdot dt \cdot \int h_{ref}^2(R, S, t) \cdot dt}} \quad ;$$

- le coefficient de décorrélation $\kappa_i(S,R,t)$ est calculé par la formule suivante :

$$K_i(S, R, t) = 1 - \frac{\int\limits_{t-T/2}^{t-T/2} h_i(R, S, t) \cdot h_{ref}(R, S, t) \cdot dt}{\sqrt{\int\limits_{t-T/2}^{t+T/2} h_i^2(R, S, t) \cdot dt \cdot \int\limits_{t-T/2}^{t+T/2} h_{ref}^2(R, S, t)}}$$

où T est un paramètre temporel, tel que entre t-T/2 et t+T/2, la réponse impulsionnelle $h_i(R,S,t)$ présente plusieurs oscillations ;

- la probabilité d'exploration P(S,R,t,x) de la position x à dx près est calculée par la formule suivante :

$$P(S, R, t, x) \cdot dx = \int\limits_0^t \frac{g(x_S, x, u) \cdot g(x, x_R, t-u)}{g(x_S, x_R, t)} \cdot du$$

où $g(x_S,x,u)$ est la probabilité de transport de l'onde qui, en partant de la source au temps zéro, arrive à la position x, après un temps u,

$g(x,x_R,t-u)$ est la probabilité de transport de l'onde qui, en partant de la position x au temps zéro, arrive au capteur, après un temps t-u,

$g(x_S,x_R,t)$ est la probabilité de transport de l'onde qui, en partant de la source au temps zéro, arrive au capteur, après un temps t ;

- la fonction d'erreur $e_i(S,R,x)$ est calculée par la formule suivante :

$$e_i(S, R, x) = F\left(\frac{K_i(S, R, t) - P(S, R, t, x)}{\sigma}\right)$$

où F est une fonction positive, paire et décroissante de 0 à $+\infty$,

$\sigma$ est une erreur maximale supposée,

$\kappa_i$ est le coefficient de décorrélation estimé par les mesures des réponses impulsionnelles, et

P est une probabilité d'exploration de la position x par l'onde ;

- lorsqu'aucune détermination plus précise de la fonction F existe, on utilise la probabilité gaussienne, et la fonction d'erreur $e_i(S,R, x)$ est alors calculée par la formule suivante :

$$e_i(S, R, x) = \frac{1}{\sqrt{2 \pi \sigma}} \cdot e^{-\frac{[K_i(S,R,t) - P(S,R,t,x)]^2}{2 \sigma^2}}$$

où :

$\sigma$ est une erreur maximale supposée,

$\kappa_i$ est le coefficient de décorrélation estimé par les mesures des réponses impulsionnelles, et
P est une probabilité d'exploration de la position x par l'onde ;

- le milieu est un matériau de construction composite ;
- l'onde est une onde acoustique ultrasonore;
- l'onde acoustique ultrasonore a une fréquence supérieure à 50 kHz.

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1 est un schéma représentant un milieu dans lequel sont propagées des ondes, selon le procédé de l'invention,
- la figure 2 est un exemple de réponse impulsionnelle entre une source et un capteur, utilisée dans le procédé,
- la figure 3 est un exemple de cartographie de probabilité d'apparition d'un défaut selon le procédé.

L'objet de l'invention est un procédé pour détecter un défaut U qui apparait au cours du temps dans un milieu 1 et pour déterminer sa position dans le milieu 1.

Le procédé utilise:

- une propagation d'onde en régime de diffusion multiple, et
- un traitement des signaux par inversion bayésienne, basée sur la comparaison entre une probabilité calculée ou théorique de perturbation de l'onde liée à l'apparition d'un défaut à une position et à une date, et une même probabilité mesurée ou estimée par des mesures de perturbation de l'onde liée à l'apparition du défaut à la même position.

Par propagation d'onde, on entend notamment toute onde du type: onde acoustique, onde ultrasonore, micro-ondes, onde élastique, onde sismique, onde électromagnétique et onde optique.

La description suivante du procédé, s'attachera à présenter donc un mode de réalisation dans lequel on recherche des défauts dans un matériau tel que du béton à l'aide d'ondes ultrasonores. Mais, le procédé peut être appliqué à de nombreux domaines ou applications, autres que le contrôle non destructif de matériaux, comme la sismologie, les radars, l'optique...

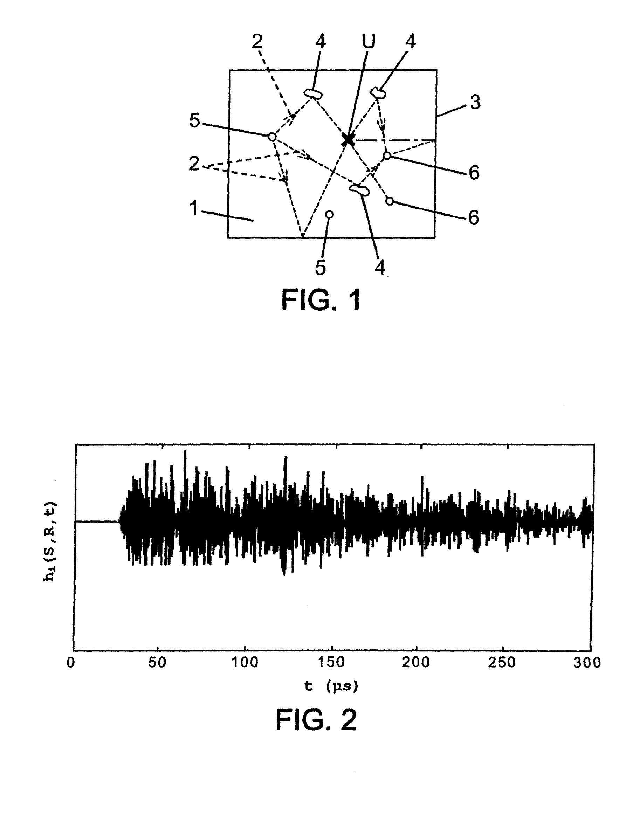

Comme représenté en figure 1, le milieu 1 est constitué par exemple d'un matériau de construction composite, tel que du béton, et comprend :

- des sources 5, identifiées respectivement par des indices S compris entre 1 et P, et placées dans le milieu 1 à des positions $x_S$ connues, lesdites sources 5 étant adaptées pour émettre une onde ultrasonore 2 dans le milieu 1,
- des capteurs 6, identifiées respectivement par des indices R compris entre 1 et Q, et placés dans le milieu 1 à des positions $x_R$ connues, lesdits capteurs 6 étant adaptés pour recevoir ladite onde ultrasonore 2 émise par au moins une des sources 5.

Il faut entendre positions $x_S$, $x_R$, comme étant chacun un vecteur représentant dans un système de coordonnées, par exemple cartésien, la position de la source 5 et du capteur 6, respectivement.

Les sources 5 et les capteurs 6 sont répartis dans le volume du milieu 1 et/ou à sa périphérie 3. La position et le nombre des sources 5 et des capteurs 6 conditionnent la résolution du procédé.

Dans le cas d'un milieu 1 en béton, l'onde ultrasonore 2 a un régime de diffusion pour une haute fréquence de l'onde, c'est-à-dire par exemple supérieure à 50 kHz. Dans ce régime de propagation, l'onde ultrasonore 2 subit de multiples diffusions et parcourt de multiples chemins dans le milieu 1, à cause des réflexions sur la périphérie 3 du milieu ou sur des hétérogénéités ou granulats 4 inclus dans ce matériau béton non homogène du milieu 1.

Grâce au régime de diffusion, l'onde ultrasonore 2 interagit plusieurs fois avec le défaut U, ce qui permet une meilleure sensibilité du procédé.

Lors de la mise en oeuvre de ce procédé, on mesure à une date $t_i$ les réponses impulsionnelles $h_i(R,S,t)$ de l'onde ultrasonore entre les sources 5 et les capteurs 6, i étant un indice naturel positif ou nul représentant cette date $t_i$. R et S sont donc dans la notation $h_i(R,S,t)$ les indices susmentionnés, identifiant la source 5 et le capteur 6 considérés. La fonction $h_i(R,S,t)$ est donc simplement une fonction du temps représentative du signal reçu par le capteur 6.

Selon le nombre de voies simultanées du matériel d'acquisition, ces enregistrements sont effectués les uns après les autres ou de manière simultanée pour au moins une partie des capteurs 6. Eventuellement ces enregistrements peuvent être répétés pour les moyenner et ainsi réduire le bruit des réponses impulsionnelles enregistrées. La figure 2 représente un exemple de réponse impulsionnelle $h_i(R,S,t)$ obtenue pour un couple de source-capteur 5, 6.

Ces mesures ou enregistrements représentent l'empreinte ou signature numérique ultrasonore du milieu à la date $t_i$.

L'apparition d'un défaut U va induire alors une modification de cette empreinte. Le défaut pourra être détecté et localisé par comparaison des mesures successives, c'est-à-dire au moins une avant apparition du défaut et au moins une après apparition du défaut. L'enregistrement des mesures est donc répété régulièrement, et avantageusement le plus souvent possible.

Plus précisément, la mise en oeuvre du procédé peut comprendre par exemple la succession des étapes suivantes :

Lors d'une première étape d'initialisation du procédé, on effectue par exemple à la date t=0, une première série de mesure. Les réponse impulsionnelles de la première série de mesures sont notées $h_{ref}(R,S,t)=h_0(R,S,t)$.

Eventuellement, une moyenne de N réponses impulsionnelles, $h_j(R,S,t)$ à des dates $t_j$ antérieures à la date $t_i$, est calculée. j est donc un indice naturel tel que $0 <= j < i$.

La réponse impulsionnelle à la date $t_0$ ou la moyenne des réponses impulsionnelles définie précédemment constitue une empreinte de référence $h_{ref}(R,S,t)$ du milieu 1.

Dans une deuxième étape du procédé, on réalise les acquisition à la date $t_i$ des réponses impulsionnelles $h_i(R,S,t)$ de l'onde ultrasonore entre les sources 5 et les capteurs 6, tel que déjà décrit précédemment.

On notera que la date $t_i$ de cette acquisition peut être effectuée à plusieurs secondes, minutes, heures ou jours de la précédente, alors que la réponse impulsionnelle $h_i(R,S,t)$ est une fonction du temps t qui est échantillonnée à une fréquence d'échantillonnage importante. Si l'onde est une onde ultrasonore, par exemple à 500 kHz, la fréquence d'échantillonnage du signal peut être supérieure à la fréquence de l'onde, c'est-à-dire de 1000 kHz. La durée de l'enregistrement de la réponse impulsionnelle est par exemple de 0,3 ms (voir figure 2), ou inférieure à 1 seconde.

Les ondes ultrasonores 2 sont sensibles à des variations globales environnementales du milieu, telles que la température, les contraintes, etc. L'objet du procédé est de détecter des variations locales, l'apparition de défauts U localisés. Ces variations globales peuvent donc gêner la détection des variations locales, c'est pourquoi il peut être avantageux de corriger les mesures des réponses impulsionnelles $h_i(R,S,t)$ pour éliminer ou au moins réduire l'effet des variations globales.

Dans une troisième étape du procédé, on corrige donc éventuellement les réponses impulsionnelles $h_i(R,S,t)$ mesurées en les remplaçant par des réponses impulsionnelles corrigées $h_i(R,S,t(1-\epsilon))$, où $\epsilon$ est un coefficient de dilatation temporel qui maximise le coefficient de corrélation suivant:

$$CC(\epsilon) = \frac{\int h_i(R,\, S,\, t(1-\epsilon))\,.h_{ref}(R,\, S,\, t)\,.dt}{\sqrt{\int h_i^2(R,\, S,\, t)\,.dt.\int h_{ref}^2(R,\, S,\, t)\,.dt}} \qquad (1),$$

les intégrales précédentes étant effectuées sur l'ensemble du signal de la réponse impulsionnelle $h_i(R,S,t)$.

Les réponses impulsionnelles corrigées sont avantageusement ré-échantillonnées et interpolées pour avoir un échantillonnage aux mêmes instants temporels que les réponses impulsionnelles $h_i(R,S,t)$ non corrigées, de telle sorte que les calculs suivants sont réalisés de manière identique.

Dans une quatrième étape du procédé, on calcule un coefficient de décorrélation $\kappa_i(S,R,t)$ entre les réponses impulsionnelles $h_i(R,S,t)$ à la date $t_i$ et les réponses impulsionnelles de référence $h_{ref}(R,S,t)$, pour comparer les empreintes numériques ultrasonores, et qui traduit la perturbation de l'onde liée à l'apparition du défaut U.

Par exemple, pour chaque couple source-capteur 5, 6, on a :

$$K_i(S,\, R,\, t) = 1 - \frac{\int\limits_{t-T/2}^{t-T/2} h_i(R,\, S,\, t)\,.h_{ref}(R,\, S,\, t)\,.dt}{\sqrt{\int\limits_{t-T/2}^{t+T/2} h_i^2(R,\, S,\, t)\,.dt.\int\limits_{t-T/2}^{t+T/2} h_{ref}^2(R,\, S,\, t)}} \qquad (2)$$

Avec T un paramètre temporel tel qu'entre t-T/2 et t+T/2, la réponse impulsionnelle $h_i(R,S,t)$ présente plusieurs oscillations. Notamment, il peut être intéressant que cette réponse impulsionnelle présente plus de 10 oscillations autour de zéro en dynamique.

S'il n'y a pas de différence entre les empreintes numériques ultrasonores, le coefficient de décorrélation $\kappa_i(S,$

R,t) est nul.

Des différences entre les empreintes numériques ultrasonores provoqueront un coefficient de décorrélation $\kappa_i$ (S,R,t) supérieur à zéro.

Si un défaut apparaît dans le milieu, alors les empreintes numériques ultrasonores vont progressivement se décorréler et le coefficient de décorrélation $\kappa_i(S,R,t)$ va augmenter.

Si les empreintes sont aléatoires et indépendantes les unes des autres, le coefficient de décorrélation $\kappa_i(S,R,t)$ est alors maximal et prend la valeur 1.

Dans une cinquième étape du procédé, on calcule une probabilité d'exploration P(S,R,t,x).dx d'une position x (à dx près) dans le milieu 1 par l'onde ultrasonore, en partant de la source 5 et en arrivant au capteur 6, après un temps t, par l'intégrale suivante :

$$P(S,R,t,x).dx = \int_0^t \frac{g(x_S,\,x,\,u)\,.g(x,\,x_R,\,t-u)}{g(x_S,\,x_R,\,t)}.du \qquad (3)$$

Où $g(x_S,x,u)$ est la probabilité de transport de l'onde ultrasonore qui, en partant de la source 5 au temps zéro, arrive à la position x, après un temps u,

$g(x,x_R,t-u)$ est la probabilité de transport de l'onde ultrasonore qui, en partant de la position x au temps zéro, arrive au capteur 6, après un temps t-u,

$g(x_S,x_R,t)$ est la probabilité de transport de l'onde ultrasonore qui, en partant de la source 5 au temps zéro, arrive au capteur 6, après un temps t.

La fonction de probabilité g correspond à une intensité de l'onde transmise. Cette fonction de probabilité g peut être estimée dans le cas où un capteur 6 est présent à la position x (x=$x_R$), par l'enveloppe de la réponse impulsionnelle $h_i(R,S,t)$ :

$$g(x_R,\,x_S,\,t) \approx \mathrm{enveloppe}\!\left(\overline{h_i^2(R,\,S,\,t)}\right),$$

l'enveloppe de ce signal pouvant être calculé par la valeur absolue de sa transformée de Hilbert.

Cependant, pour calculer la probabilité d'exploration P(S,R,t,x) de la position x, il est nécessaire de calculer la fonction de probabilité g en tout point du milieu de position x, notamment en des points où il n'y a ni source 5, ni capteur 6.

En pratique, la connaissance parfaite de la fonction de probabilité g est donc difficile. C'est pourquoi la fonction de probabilité g est souvent calculée numériquement par un modèle du milieu 1, dans lequel on intègre la connaissance par exemple de :

- la géométrie du milieu 1,
- la valeur du coefficient de diffusion D de l'onde dans le milieu 1, ce coefficient de diffusion D pouvant être estimé par des mesures sur ledit milieu, et
- de paramètres de conditions aux limites du milieu, sur sa périphérie ou bords 3 ; et notamment de coefficients d'absorption, de réflexion partielle ou totale, etc...

Une première variante pour simuler le modèle du milieu 1 est de résoudre une équation de diffusion, du type :

$$\frac{\partial g}{\partial t} = D.\nabla^2 g$$

Où g(x,t) est une grandeur représentant une onde, et
D un coefficient de diffusion.

Une deuxième variante pour simuler, le modèle du milieu 1 est de résoudre une équation de Paaschens.

Une telle approche plus complexe, et donne des résultats plus précis. On se référera à la publication suivant pour sa mise en oeuvre: Paasschens, J. « Solution of the time-dependent Boltzmann equation », Phys. Rev. E, 1997, 56, 1135-1141.

Une troisième variante pour simuler, le modèle du milieu 1 est de résoudre une équation de transfert radiatif.

Une telle approche est encore plus complexe, et donne des résultats encore plus précis. On se référera pour sa mise en oeuvre au livre de Chandrasekhar, S., « Radiative Transfer », Oxford University Press, 1950, et à la publication de Margerin, L. et Campillo, M. et Van Tiggelen, B. « Monte Carlo simulation of multiple scattering of elastic waves », J. Geophys. Res., 2000, 105, 7873-7892.

Le calcul des coefficients de décorrélation $\kappa_i(S,R,t)$ pour chaque couple source-récepteur 5, 6 donne une valeur approchée de la probabilité d'exploration $p(S,R,t,x).dx$ d'une position x par l'onde ultrasonore.

Dans une sixième étape du procédé, on calcule alors une fonction d'erreur $e_i(S,R, x)$ pour chaque couple de source-capteur 5, 6 :

$$e_i(S, R, x) = F\left(\frac{K_i(S, R, t) - P(S, R, t, x)}{\sigma}\right)$$

où F est une fonction positive, paire et décroissante de 0 à $+\infty$.

Cette fonction peut par exemple s'approximer par une loi de distribution gaussienne par la formule suivante :

$$e_i(S, R, x) = \frac{1}{\sqrt{2 \cdot \pi \cdot \sigma}} \cdot e^{-\frac{[K_i(S,R,t)-P(S,R,t,x)]^2}{2 \cdot \sigma^2}}$$

Où $\sigma$ est l'erreur maximale supposée,

$\kappa_i$ est le coefficient de décorrélation calculé par les séries de mesure de réponse impulsionnelles, et

P est la probabilité d'exploration d'une position x par l'onde ultrasonore, calculé de manière théorique.

Le coefficient multiplicateur $\frac{1}{\sqrt{2 \cdot \pi \cdot \sigma}}$ peut éventuellement être omis dans les calculs, puisqu'il ne représente qu'une constante d'échelle.

Enfin, dans une septième étape du procédé, on calcule le produit p de au moins certaines des fonctions d'erreur $e_i$ des couples de source-capteur 5, 6 :

$$p(i, x) = \prod_{S,R} e_i(S, R, x)$$

Ce produit p(i,x) représente une cartographie ou image de la probabilité d'apparition d'un défaut à chaque position x à la date $t_i$.

Le produit p peut être éventuellement normalisé en divisant chaque valeur de p par Norm :

Norm = $\int p(i,x).dx$, intégrale sur l'ensemble des positions x du milieu.

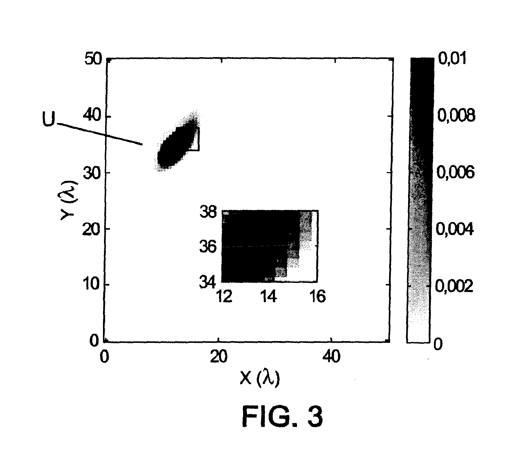

Un exemple à deux dimensions d'une telle cartographie est donnée en figure 3, dans laquelle une échelle allant du blanc au noir correspond à une densité spatiale de probabilité d'apparition de défaut allant de 0 à 0,01, respectivement. L'unité est une densité de probabilité par longueur d'onde au carré, pour une détection sur une surface. Dans le cas d'une détection dans un volume, l'unité sera une densité de probabilité volumique par longueur d'onde au cube. Le défaut U est bien localisé par une tache très sombre centrée sur une position de coordonnées cartésiennes (14, 35) en longueur d'onde $\lambda$.

Cette figure 3 comprend une partie représentant une portion agrandie de la tache montrant que le contraste entre la tache et le fond de la cartographie est élevé. La position du défaut U est donc bien définie dans une région du milieu.

## Revendications

1. Procédé de localisation d'apparition d'un défaut dans un milieu par une onde, ledit milieu étant équipé :

   - de sources (5) placées dans ledit milieu et adaptées pour émettre l'onde dans le milieu,
   - de capteurs (6) placés dans ledit milieu et adaptés pour recevoir l'onde émise, ledit procédé étant **caractérisé en ce qu'**il comprend :
   - une étape d'initialisation dans laquelle on détermine des réponses impulsionnelles de référence $h_{ref}(R,S,t)$ de l'onde entre les sources (5) et les capteurs (6), puis

- au moins une étape de détection de défauts, dans laquelle :

a) on mesure à une date $t_i$ les réponses impulsionnelles $h_i(R,S,t)$ de l'onde entre les sources (5) et les capteurs (6), i étant un indice naturel positif,

b) on calcule un coefficient de décorrélation $\kappa_i(S,R,t)$ entre les réponses impulsionnelles $h_i(R,S,t)$ à la date $t_i$ et les réponses impulsionnelles de référence $h_{ref}(R,S,t)$,

c) on calcule une probabilité d'exploration $P(S,R,t,x)$ d'une position x du milieu par l'onde,

d) on calcule une fonction d'erreur $e_i(S,R,x)$ pour chaque couple de source-capteur (5, 6), et

e) on calcule le produit $p(i,x)$ de au moins certaines des fonctions d'erreur $e_i(S,R,x)$ des couples de source-capteur (5, 6); par $$p(i, x) = \prod_{S,R} e_i(S, R, x),$$ ledit produit $p(i,x)$

représentant une cartographie de la probabilité d'apparition d'un défaut U à chaque position x.

2. Procédé selon la revendication 1, dans lequel le milieu comprend des hétérogénéités et l'onde se propage dans le milieu selon un régime de diffusion multiple pour lequel l'onde interagit au cours de son trajet avec plus d'une hétérogénéité.

3. Procédé selon la revendication 1 ou la revendication 2, dans lequel après l'étape e), on normalise le produit $p(i,x)$ en divisant chaque valeur par Norm = $\int p(i,x).dx$, intégrale sur l'ensemble des positions x du milieu.

4. Procédé selon l'une des revendications précédentes, dans lequel les réponses impulsionnelles de référence $h_{ref}(R,S,t)$ sont déterminées par la moyenne de N réponses impulsionnelles $h_j(R,S,t)$ à des dates $t_j$, j étant un indice naturel tel que $0 <= j < i$, et N étant tel que $1 <= N <= i$.

5. Procédé selon l'une des revendications précédentes, dans lequel entre l'étape a) et b), on corrige les réponses impulsionnelles $h_i(R,S,t)$ mesurées en les remplaçant par des réponses impulsionnelles corrigées $h_i(R, S, t(1-\varepsilon))$, où $\varepsilon$ est un coefficient de dilatation temporel qui maximise le coefficient de corrélation suivant:

$$CC(\varepsilon) = \frac{\int h_i(R, S, t(1 - \varepsilon)).h_{ref}(R, S, t).dt}{\sqrt{\int h_i^2(R, S, t).dt.\int h_{ref}^2(R, S, t).dt}}$$

6. Procédé selon l'une des revendications précédentes, dans lequel le coefficient de décorrélation $\kappa_i(S,R,t)$ est calculé par la formule suivante:

$$K_i(S, R, t) = 1 - \frac{\int_{t-T/2}^{t-T/2} h_i(R, S, t).h_{ref}(R, S, t).dt}{\sqrt{\int_{t-T/2}^{t+T/2} h_i^2(R, S, t).dt.\int_{t-T/2}^{t+T/2} h_{ref}^2(R, S, t)}}$$

où T est un paramètre temporel, tel que entre t-T/2 et t+T/2, la réponse impulsionnelle $h_i(R,S,t)$ présente plusieurs oscillations.

7. Procédé selon l'une des revendications précédentes, dans lequel la probabilité d'exploration $P(S,R,t,x)$ de la position x à dx près est calculée par la formule suivante :

$$P(S, R, t, x) \cdot dx = \int_0^t \frac{g(x_S, x, u) \cdot g(x, x_R, t - u)}{g(x_S, x_R, t)} \cdot du$$

Où $g(x_S, x, u)$ est la probabilité de transport de l'onde qui, en partant de la source (5) au temps zéro, arrive à la position x, après un temps u,
$g(x, x_R, t-u)$ est la probabilité de transport de l'onde qui, en partant de la position x au temps zéro, arrive au capteur (6), après un temps t-u,
$g(x_S, x_R, t)$ est la probabilité de transport de l'onde qui, en partant de la source (5) au temps zéro, arrive au capteur (6), après un temps t.

8. Procédé selon l'une des revendications précédentes, dans lequel la fonction d'erreur $e_i(S,R,x)$ est calculée par la formule suivante:

$$e_i(S, R, x) = F\left(\frac{K_i(S, R, t) - P(S, R, t, x)}{\sigma}\right)$$

où F est une fonction positive, paire et décroissante de 0 à $+\infty$,
$\sigma$ est une erreur maximale supposée,
$\kappa_i$ est le coefficient de décorrélation estimé par les mesures des réponses impulsionnelles, et
P est une probabilité d'exploration de la position x par l'onde.

9. Procédé selon l'une des revendications 1 à 7, dans lequel la fonction d'erreur $e_i(S,R, x)$ est calculée par la formule suivante :

$$e_i(S, R, x) = \frac{1}{\sqrt{2.\pi.\sigma}} \cdot e^{-\frac{[K_i(S,R,t) - P(S,R,t,x)]^2}{2.\sigma^2}}$$

où :

$\sigma$ est une erreur maximale supposée,
$\kappa_i$ est le coefficient de décorrélation estimé par les mesures des réponses impulsionnelles, et
P est une probabilité d'exploration de la position x par l'onde.

10. Procédé selon l'une des revendications précédentes, dans lequel le milieu est un matériau de construction composite.

11. Procédé selon l'une des revendications précédentes, dans lequel l'onde est une onde acoustique ultrasonore.

12. Procédé selon la revendication précédente, dans lequel l'onde acoustique ultrasonore a une fréquence supérieure à 50 kHz.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Paasschens, J.** Solution of the time-dependent Boltzmann equation. *Phys. Rev. E,* 1997, vol. 56, 1135-1141
- **Chandrasekhar, S.** Radiative Transfer. Oxford University Press, 1950
- **Margerin, L. ; Campillo, M. ; Van Tiggelen, B.** Monte Carlo simulation of multiple scattering of elastic waves. *J. Geophys. Res.,* 2000, vol. 105, 7873-7892